# EUROPEAN PATENT APPLICATION

(11) **EP 4 099 491 A2**
(43) Date of publication of application: **07.12.2022**
(21) Application number: 22176446.7
(22) Date of filing: 31.05.2022
(51) Int. Cl.: H01M 50/247, A24F 40/40, H01M 50/262, H01M 50/284

(54) **BATTERY ASSEMBLY AND ELECTRONIC ATOMIZING DEVICE**

(30) Priority: 01.06.2021 CN 202110609740
(71) Applicant: Shenzhen Smoore Technology Limited, Shenzhen, Guangdong 518102 (CN)
(72) Inventor: LIANG, Zhijia, Shenzhen, 518102 (CN); MING, Zhinan, Shenzhen, 518102 (CN); SHEN, Pifa, Shenzhen, 518102 (CN)
(74) Representative: De Arpe Tejero, Manuel

(57) **Abstract**

The present disclosure provides a battery assembly (300) and an electronic atomizing device (100), the battery assembly (300) includes a circuit board (11); a clamping component (12) disposed on the circuit board; and a conductive component (13) inserted into the clamping component (12) to be electrically connected to the circuit board (11) through the clamping component (12). The electronic atomizing device (100) includes an atomizer (200); and the battery assembly (300) configured to supply power to the atomizer (200). In this way, the electronic atomizing device and the battery assembly are easy to assemble, convenient to produce, and have a low cost.

## Description

### TECHNICAL FIELD

The present disclosure relates to the field of electronic atomizing devices, and in particular, to a battery assembly and an electronic atomizing device.

### BACKGROUND

In existing electronic atomizing devices, generally, a POGO pin connector is connected to a circuit board via a wire. This configuration has a disadvantage of space waste and high labor cost.

### SUMMARY

The present disclosure provides a battery assembly and an electronic atomizing device, as set out in the appended set of claims, which are simple to assemble, convenient to produce, and have low cost.

Regarding the beneficial effect of the present disclosure, different from the related art, in the battery assembly and the electronic atomizing device provided by the present disclosure, the clamping component is disposed on the circuit board, and the conductive component is inserted into the clamping component to be electrically connected to the circuit board through the clamping component, such that the electronic atomizing device and the battery assembly are simple to assemble, convenient to produce, and have low cost.

### BRIEF DESCRIPTION OF THE DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and a person of ordinary skill in the art may still derive other drawings from these accompanying drawings without creative efforts.
FIG. 1 is a cross-sectional structural schematic diagram of a battery assembly according to an embodiment of the present disclosure.
FIG. 2 is another cross-sectional structural schematic diagram of a battery assembly according to an embodiment of the present disclosure.
FIG. 3 is a structural schematic diagram of a conductive component and a clamping component according to an embodiment of the present disclosure.
FIG. 4 is a structural schematic diagram of a clamping component according to an embodiment of the present disclosure.
FIG. 5 is a schematic diagram of a preparation process of a clamping component according to an embodiment of the present disclosure.
FIG. 6 is a structural schematic diagram of an electronic atomizing device according to an embodiment of the present disclosure.

### DETAILED DESCRIPTION

The technical solutions in embodiments of this disclosure are clearly and completely described below with reference to accompanying drawings in the embodiments of the present disclosure. Apparently, the embodiments are merely some rather than all of embodiments of the present disclosure. Other embodiments obtained by a person skilled in the art based on the embodiments of the present disclosure without creative efforts shall fall within the scope of the present disclosure.

The terms "first", "second", and "third" in the present disclosure are used for descriptive purposes only and are not to be construed as indicating or implying relative importance or implicitly indicating the number of technical features indicated. Therefore, features defining "first", "second", and "third" may explicitly or implicitly include at least one of the features. In the description of the present disclosure, "a plurality of" means at least two, such as two and three unless it is specifically defined otherwise. All directional indications (for example, up, down, left, right, front, back) in the embodiments of the present disclosure are only used for explaining relative position relationships, movement situations or the like between various components in a specific condition (as shown in the accompanying drawings). If the specific condition changes, the directional indications change accordingly. In addition, the terms "include", "have", and any variant thereof are intended to cover a non-exclusive inclusion. For example, a process, method, system, product, or device that includes a series of steps or units is not limited to the listed steps or units, but further optionally includes steps or units that are not listed, or further optionally includes another steps or units that are intrinsic to the process, method, product, or device.

The term "embodiment" mentioned in the specification means that particular features, structures, or characteristics described with reference to embodiments may be included in at least one embodiment of the present disclosure. The term "embodiment" appearing at different positions of the specification may not refer to the same embodiment or an independent or alternative embodiment that is mutually exclusive with another embodiment. A person skilled in the art explicitly or implicitly understands that the embodiments described in the specification may be combined with other embodiments.

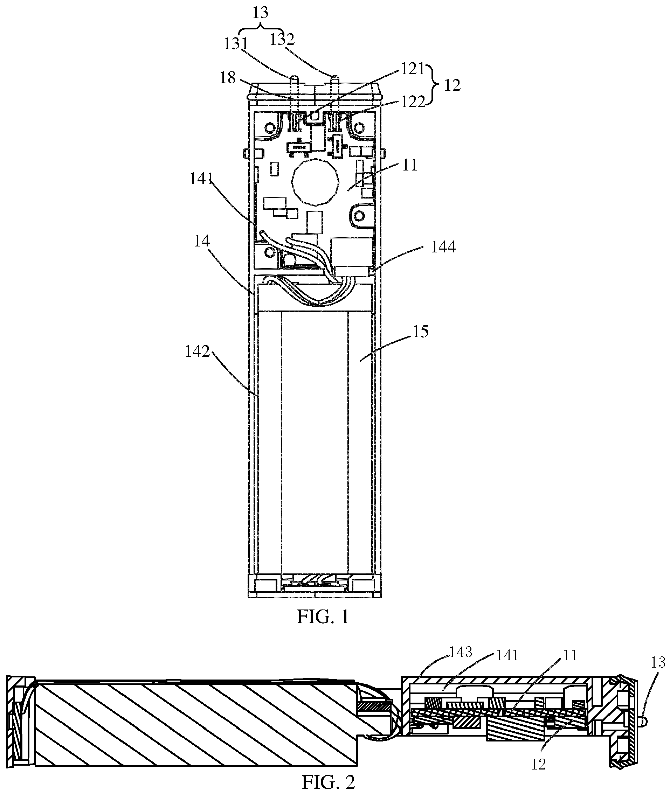

Referring to FIG. 1 and FIG. 2, FIG. 1 and FIG. 2 are structural schematic diagrams of an embodiment of a battery assembly according to the present disclosure. Specifically, the battery assembly includes a circuit board 11, a clamping component 12, and a conductive component 13. Specifically, the clamping component 12 is disposed on the circuit board 11, the clamping component 12 is arranged on a side of the circuit board 11, and the conductive component 13 is inserted into the clamping component 12 to be electrically connected to the circuit board 11 through the clamping component 12. The conductive component 13 may be a metal thimble or other component that may be inserted into the clamping component 12, which is not limited in the present disclosure.

Specifically, the battery assembly further includes a bracket 14 defining a first accommodating groove 141 and a second accommodating groove 142. The circuit board 11 is accommodated in the first accommodating groove 141, and the clamping component 12 is arranged on a side of the circuit board 11 away from a bottom 143 of the first accommodating groove 141, as shown in FIG. 2. A battery core 15 is arranged in the second accommodating groove 142. In some embodiments, the first accommodating groove 141 and the second accommodating groove 142 are spaced apart with a common sidewall 144 therebetween. Specifically, a sidewall of the first accommodating groove 141 away from the second accommodating groove 142 defines a through hole 18 facing a position of the clamping component 12, and the conductive component 13 is inserted into the clamping component 12 via the through hole 18. That is, the sidewall of the first accommodating groove 141 away from the second accommodating groove 142 forms a connection portion, and the connection portion may be further arranged with a connector such as a magnet component in addition to the conductive component 13.

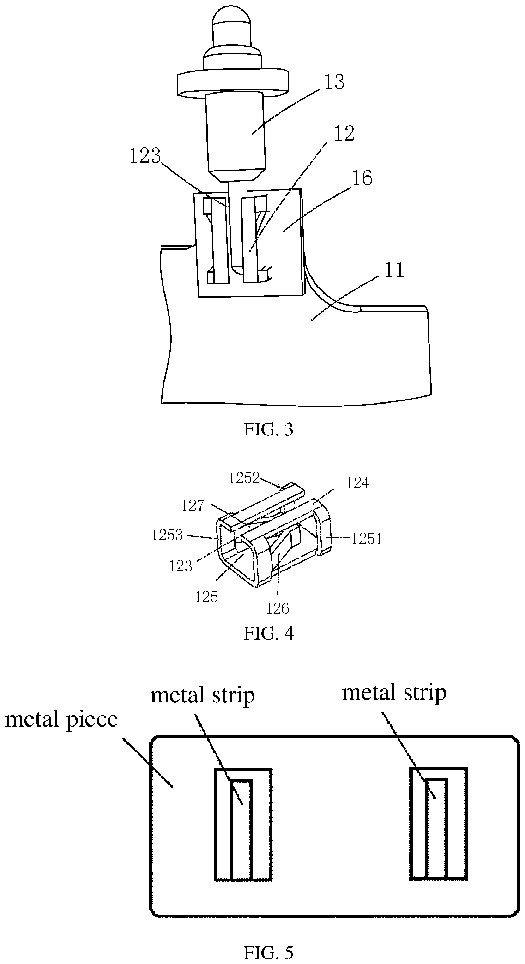

In some embodiments, a side of the clamping component 12 close to the circuit board 11 may be arranged with a viscous substance. The viscous substance may be a conductive adhesive. The clamping component 12 is bonded to the circuit board 11 for electrical connection with the circuit board 11. In other embodiments, the clamping component 12 may be electrically connected to the circuit board 11 through another bonding component. Specifically, as shown in FIG. 3, the battery assembly may further include a bonding component 16. The bonding component 16 is arranged between the clamping component 12 and the circuit board 11 to electrically connect the clamping component 12 to the circuit board 11. In some embodiments, the bonding component 16 is a viscous conductive material, such as a conductive adhesive or the like, arranged between the circuit board 11 and the clamping component 12 to fix the clamping component 12 on the circuit board 11. Further, the clamping component 12 is made of a conductive material such as copper or silver, or an alloy. After the conductive component 13 is inserted into the clamping component 12, the conductive component 13 is electrically connected to the circuit board 11 through the clamping component 12 and the bonding component 16.

In some embodiments, the bonding component 16 may be arranged around the clamping component 12 to bond the clamping component 12 on the circuit board 11. In other embodiments, a groove configured to accommodate the clamping component 12 may be defined on the circuit board 11. The clamping component 12 is fixed in the groove, thereby being electrically connected to the circuit board 11. in some embodiments, the clamping component 12 is fixed in the groove through the bonding component 16 such as a conductive adhesive, thereby being electrically connected to the circuit board 11.

In some embodiments, the conductive component 13 is a Pogo pin connector. A Pogo pin is a spring pin formed by riveting and pre-pressing a pin shaft, a spring, and a pin tube by a precision instrument, to have a precision spring structure in the Pogo pin. A surface plating of the Pogo pin is generally made of gold, which may better improve the corrosion resistance, mechanical properties, electrical properties, and the like. A pin tip of the Pogo pin may be a pointed needle, a gripping needle, a round needle, a knife-shaped needle, or the like. Pogo pin is commonly applied for precision connection in electronic products in field of cell phones, communication, automobiles, medical treatment, aerospace, and the like, which may improve the corrosion resistance, stability, and durability of connectors. Since the Pogo pin is a very fine pin, the Pogo pin applied in a precision connector may reduce weight and volume of the connector, which enables the connector to be more refined and aesthetic.

In some embodiments, the number of the clamping components 12 is two, the number of the conductive components 13 is two, and each conductive component 13 is inserted into a corresponding clamping component 12. Specifically, as shown in FIG. 1, the clamping component 12 includes a first clamping component 121 and a second clamping component 122, the conductive component 13 includes a first conductive component 131 and a second conductive component 132. The first conductive component 131 is inserted into the first clamping component 121, and the first conductive component 131 is electrically connected to the circuit board 11 through the first clamping component 121 and a corresponding bonding component 16. The second conductive component 132 is inserted into the second clamping component 122, and the second conductive component 132 is electrically connected to the circuit board 11 through the second clamping component 122 and a corresponding bonding component 16.

Specifically, as shown in FIG. 4, the clamping component 12 includes a main body 124, a first clamping piece 126, and a second clamping piece 127. The main body 124 defines an accommodating cavity 125, and a bottom wall 1253 of the accommodating cavity 125 defines an insertion port 123 for insertion of the conductive component 13. The first clamping piece 126 and the second clamping piece 127 are arranged inside the accommodating cavity 125, and are exposed through the insertion port 123. A first end of the first clamping piece 126 and a first end of the second clamping piece 127 are disposed close to the insertion port 123, the first end of the first clamping piece 126 is connected to a first sidewall 1251 of the accommodating cavity 125, the first end of the second clamping piece 127 is connected to a second sidewall 1252 of the accommodating cavity 125; and a second end of the first clamping piece 126 and a second end of the second clamping piece 127 are disposed away from the insertion port 123 and extend inside the accommodating cavity 125, so as to form a clamp configured to clamp the conductive component 13.

Specifically, a middle part of the first clamping piece 126 is arranged between the first end and the second end of the first clamping piece 126, a middle part of the first clamping piece 127 is arranged between the first end and the second end of the first clamping piece 127.The middle part of the first clamping piece 126 is disposed inclined relative to the first sidewall 1251 of the accommodating cavity 125, and the second end of the first clamping piece 126 is bent relative to the middle part of the first clamping piece 126 and is parallel to the first sidewall 1251 of the accommodating cavity 125; the middle part of the second clamping piece 127 is disposed inclined relative to the second sidewall 1252 of the accommodating cavity 125, and the second end of the second clamping piece 127 is bent relative to the middle part of the second cl amping piece 127 and is parallel to the second sidewall 1252 of the accommodating cavity 125.

Specifically, at a position of the clamp formed by the second end of the first clamping piece 126 and the second end of the second clamping piece 127, a distance between the second end of the first clamping piece 126 and the second end of the second clamping piece 127 is less than or equal to an outer diameter of the conductive component 13, so that the clamp may clamp the conductive component 13 when the conductive component 13 is inserted into the clamping component 12.

In some embodiments, a spring may be disposed between the second end of the first clamping piece 126 and the first sidewall 1251 of the accommodating cavity 125, another spring may be disposed between the second end of the second clamping piece 127 and the second sidewall 1252 of the accommodating cavity 125. When the conductive component 13 is inserted into the clamping component 12, the second end of the first clamping piece 126 is squeezed to move toward the first sidewall 1251 of the accommodating cavity 125 to compress the spring, the second end of the second clamping piece 127 is squeezed to move toward the second sidewall 1252 of the accommodating cavity 125 to compress the another spring, the spring and the another spring reversely respectively squeeze the second end of the first clamping piece 126 and the second end of the second clamping piece 127, thereby clamping the conductive component 13 and preventing the conductive component 13 from falling off.

In some embodiments, the first clamping piece 126, the second clamping piece 127, and the main body 124 are in a one-piece structure, and the main body 124 is a hollow tubular body. In other embodiments, in order to reduce weight of the clamping component 12, the first sidewall 1251 and the second sidewall 1252 may be arranged as a hollowed-out structure, so that the bonding component 16 may better bond the clamping component 12 on the circuit board 11. Further, another sidewall to which the opposite two sidewalls of the accommodating cavity 125 are connected defines a notch or a slit, and the notch or the slit extends along an axial direction of the hollow tubular body, so that sidewalls of the hollow tubular body form a non-closed annulus, which also is conductive to forming the clamping component 12. Specifically, referring to FIG. 5, the clamping component 12 may be form of a rectangular conductive metal piece. For example, the rectangular conductive metal piece is cut to form two metal strips configured to form the first clamping piece 126 and the second clamping piece 127, the rectangular conductive metal piece is bent to form a shape as shown in FIG. 4, and the two metal strips are respectively bent toward an interior of the accommodating cavity 125, thereby forming the first clamping piece 126 and the second clamping piece 127.

In the battery assembly of the present disclosure, the conductive component 13 is not connected to the circuit board 11 via a wire, but rather is connected to the circuit board 11 via the clamping component 12, so that the battery assembly is simple to assemble, convenient to produce, and has low cost.

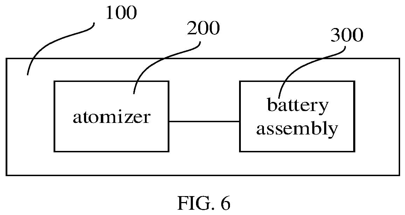

Referring to FIG. 6, FIG. 6 is a structural schematic diagram of an electronic atomizing device according to an embodiment of the present disclosure. Specifically, the electronic atomizing device 100 includes an atomizer 200 and a battery assembly 300. The battery assembly 300 is configured to supply power to the atomizer 200, and the battery assembly 300 includes the battery assembly shown in any of foregoing embodiments in FIG. 1 to FIG. 3.

In the electronic atomizing device 100 of the present disclosure, the conductive component 13 is not connected to the circuit board 11 via a wire, but rather is connected to the circuit board 11 via the clamping component 12, so that the electronic atomizing device is simple to assemble, convenient to produce, and has low cost.

## Claims

1. A battery assembly (300), **characterized by** comprising:
a circuit board (11);
a clamping component (12), disposed on the circuit board (11); and
a conductive component (13), inserted into the clamping component (12) and electrically connected to the circuit board (11) through the clamping component (12).

2. The battery assembly (300) according to claim 1, further comprising:
a bracket (14), defining a first accommodating groove (141), wherein the circuit board (11) is accommodated in the first accommodating groove (141), the clamping component (12) is arranged on a side of the circuit board (11) away from a bottom (143) of the first accommodating groove (141).

3. The battery assembly (300) according to claim 1 or 2, wherein a viscous substance is arranged on a side of the clamping component (12) close to the circuit board (11), the viscous substance is configured to electrically connect the clamping component (12) to the circuit board (11); or
the battery assembly (300) further comprises:
a bonding component (16), arranged between the clamping component (12) and the circuit board (11) to electrically connect the clamping component (12) to the circuit board (11).

4. The battery assembly (300) according to claim 2, wherein the bracket (14) further defines a second accommodating groove (142) configured to accommodate a battery core (15), the first accommodating groove (141) and the second accommodating groove (142) are spaced apart;
a sidewall of the first accommodating groove (141) away from the second accommodating groove (142) defines a through hole (18) facing the clamping component (12), and the conductive component (13) is inserted into the clamping component (12) through the through hole (18).

5. The battery assembly (300) according to any one of claims 1 to 4, wherein the number of the clamping components (12) is two, the number of the conductive components (13) is two, and each the conductive component (13) is inserted into a corresponding clamping component (12).

6. The battery assembly (300) according to claim 1, wherein the clamping component (12) comprises a main body (124), a first clamping piece (126) and a second clamping piece (127);
the main body (124) defines an accommodating cavity (125), a bottom wall (1253) of the accommodating cavity (125) defines an insertion port (123), and the conductive component (13) is inserted through the insertion port (123); the first clamping piece (126) and the second clamping piece (127) are arranged in the accommodating cavity (125) and exposed through the insertion port (123);
a first end of the first clamping piece (126) and a first end of the second clamping piece (127) are disposed close to the insertion port (123), the first end of the first clamping piece (126) is connected to a first sidewall (1251) of the accommodating cavity (125), the first end of the second clamping piece (127) is connected to a second sidewall (1252) of the accommodating cavity (125); and a second end of the first clamping piece (126) and a second end of the second clamping piece (127) are disposed away from the insertion port (123) and extend inside the accommodating cavity (125), so as to form a clamp configured to clamp the conductive component (13).

7. The battery assembly according to claim 6, wherein the first clamping piece, the second clamping piece, and the main body are in a one-piece structure.

8. The battery assembly (300) according any one of claims 6 or 7, wherein a middle part between the first end and the second end of the first clamping piece (126) is disposed inclined relative to the first sidewall (1251) of the accommodating cavity (125), and the second end of the first clamping piece (126) is bent relative to the middle part of the first clamping piece (126) and is parallel to the first sidewall (1251) of the accommodating cavity (125); a middle part between the first end and the second end of the second clamping piece (127) is disposed inclined relative to the second sidewall (1252) of the accommodating cavity (125), and the second end of the second clamping piece (127) is bent relative to the middle part of the second clamping piece (127) and is parallel to the second sidewall (1252) of the accommodating cavity (125).

9. The battery assembly (300) according to any one of claims 6 to 8, wherein the main body (124) is a hollow tubular body, the first sidewall (1251) and the second sidewall (1252) are in a hollowed-out structure.

10. An electronic atomizing device (100), **characterized by** comprising:
an atomizer (200); and
the battery assembly (300) according to any one of claims 1 to 9, configured to supply power to the atomizer (200).
